# EUROPÄISCHE PATENTANMELDUNG

(11) **EP 0 903 825 A2**
(43) Veröffentlichungstag der Anmeldung: **24.03.1999**
(21) Anmeldenummer: 98117941.9
(22) Anmeldetag: 22.09.1998
(51) Int. Cl.: H02B 1/32

(54) **Schaltschrank zur Aufnahme von Komponenten einer Serienkreisbefeuerung auf Flughäfen**

(30) Priorität: 22.09.1997 DE 29716972 U
(71) Anmelder: SIEMENS AKTIENGESELLSCHAFT, 80333 München (DE)
(72) Erfinder: Schmidt, Helmut, 91341 Röttenbach (DE); Schneider, Christian, 91619 Obernzenn (DE)

(57) **Zusammenfassung**

Schaltschrank zur Aufnahme von Komponenten einer Serienkreisbefeuerung auf Flughäfen, z.B. eines Konstantstrom-Reglers, eines Meßkomponententrägers und eines Serienkreistransformators

Schaltschrank zur Aufnahme von Komponenten einer Serienkreisbefeuerung auf Flughäfen, z.B. eines Konstantstrom-Reglers, eines Meßkomponententrägers und eines Serienkreistransformators, wobei seine Abmessungen derart sind, daß mehrere, vorzugsweise zumindest drei, Serienkreistransformatoren (13) mit ihren Anschlüssen, drei Meßkomponententräger (10) und drei Konstantstrom-Regler (8) in ihnen unterbringbar sind.

## Beschreibung

Schaltschrank zur Aufnahme von Komponenten einer Serienkreisbefeuerung auf Flughäfen, z.B. eines Konstantstrom-Reglers, eines Meßkomponententrägers und eines Serienkreistransformators

Aus der Druckschrift der Firma Siemens "Konstantstrom-Regler Mikroprozessorgesteuert, Nr. A.06.350 d, ist für den Gebrauch auf Flughäfen ein Schaltschrank zur Aufnahme von MCR-Reglern bekannt. MCR-Regler dienen speziell der Versorgung von Serienstromkreisen in Flughafenbefeuerungsanlagen. Je ein MCR-Regler befindet sich in je einem Schaltschrank, der ein Leistungsmodul, ein Steuermodul und einen Hochspannungsteil enthält.

Es ist Aufgabe der Erfindung, einen Schaltschrank mit seinen Einrichtungen anzugeben, der in kompakter Bauweise mehrere Konstantstrom-Regler in mikroprozessorgesteuerter Ausführung aufnehmen kann, um die Gehäusekosten bei gleichzeitig verbesserter Funktionalität zu senken.

Die Aufgabe wir dadurch gelöst, daß die Abmessungen des Schaltschranks derart sind, daß mehrere, vorzugsweise zumindest drei, Serienkreistransformatoren mit ihren Anschlüssen, drei Meßkomponententräger und drei Konstantstrom-Regler in ihm unterbringbar sind. Durch die erfindungsgemäße Ausbildung wird vorteilhaft der Tatsache Rechnung getragen, daß in einem Flughafen nicht nur ein Serienkreis vorhanden ist, sondern daß in der Regel eine Vielzahl von Serienkreisen zu schalten und zu regeln ist. Auch Schaltschränke, die mehrere Konstantstrom-Regler mit ihrer Peripherie aufnehmen, sind daher in der Regel platzmäßig gut ausgenutzt.

In Ausgestaltung der Erfindung ist vorgesehen, daß der Schaltschrank derartige Abmessungen aufweist, daß in ihm bis zu sechs Serienkreistransformatoren unter 4 KVA sowie die zugehörigen Meßkomponententräger und Konstantstrom-Regler unterbringbar sind. Durch eine Ausbildung für die Aufnahme von bis zu sechs Serienkreistransformatoren mit ihrer Peripherie ergibt sich eine optimale Schaltschrankgröße. Ein derartiger Schaltschrank ist einerseits noch nicht so groß, daß er nur unter Schwierigkeiten transportiert und aufgestellt werden kann und andererseits so groß, daß in ihm drei Serienkreistransformatoren hoher Leistung oder sechs Serienkreistransformatoren niedrigerer Leistung, z.B. unter 4 KVA oder auch eine Kombination beider Größen in optimierter Stückzahl unterbringbar ist. Der Platzbedarf und die Kosten für die Serienkreis-Schaltschränke und ihre Komponenten können so erheblich gesenkt werden.

Eine besonders günstige Größe für die Schaltschränke ergibt sich, wenn ein Schaltschrank zwischen 80 und 100 cm, vorzugsweise 90 cm breit ist, zwischen 50 und 80 cm, vorzugsweise 60 cm tief ist und zwischen 180 und 250 cm, vorzugsweise 220 cm hoch ist. So können Standardschrankteile aus einem Schranksystem des Herstellers Siemens für die Schaltschränke verwendet werden. Ein derartiges Schranksystem, Bezeichnung 8MF, ist aus dem Katalog NV 21.2 von 1995 zu ersehen. Die erfindungsgemäßen Schaltschränke brauchen also nicht mehr in Kleinserien gefertigt zu werden, sondern können aus Großserienteilen zusammengestellt werden. Dies ergibt eine weitere Kostenersparnis. Überraschenderweise können auch mit derartigen Schaltschränken aus Standardteilen die hohen, international gültigen, Sicherheitsanforderungen auf Flugplätzen erfüllt werden.

In besonders vorteilhafter Ausgestaltung der Erfindung ist vorgesehen, daß der Schaltschrank ein Unterteil mit vorzugsweise zweiteiligen Türen und ein vorzugsweise türloses Oberteil, das auf das Unterteil aufgesetzt ist, aufweist. In dem Oberteil sind Konstantstrom-Regler mit Beschriftungsfeldern, vorzugsweise direkt zugänglich angeordnet. So ergibt sich eine klare funktionale Trennung für die Komponenten der Schaltschränke und eine besonders gute Zugänglichkeit der Komponenten, die häufiger bedient werden müssen sowie ein sicherer Schutz für die Hochspannungskomponenten.

Die erforderlichen Meßkomponenten werden zusammen mit Sekundär-Funktionskomponenten serienkreisweise auf Modulblechen im Oberteil des unteren Schaltschrankteils angeordnet. So ergibt sich eine leichte Zugänglichkeit dieser Komponenten für das Bedienungs- und Servicepersonal, wobei die Anordnung auf einzelnen Blechen eine Modulbauweise erlaubt. Auch eine leichte Nach- bzw. Umrüstbarkeit wird erreicht.

In funktionaler Trennung sind die Serienkreistransformatoren vorteilhaft im unteren Abschnitt des Schaltschrankunterteils angeordnet, oberhalb von ihnen befindet sich ein Sammelschienensystem zur Einspeisung von Energie und darüber, noch unterhalb der Modulbleche, Sicherungslasttrenner. Der erfindungsgemäße Schaltschrank ist so in leicht übersichtliche Funktionsbereiche aufgeteilt, die sich, gut zugänglich, in funktioneller Anordnung übereinander befinden.

Von besonderem Vorteil ist die Übernahme der Rahmenbauweise des Schranksystems 8MF aus dem Katalog NV 21.2, da die Rahmen Lochreihen zur Befestigung der Einbauten und zur Verbindung mit weiteren Schränken aufweisen. So kann leicht und einfach auf die individuellen Anforderungen der Plazierung der einzelnen Komponenten eingegangen werden. Des weiteren ist die Bildung von Schrankwänden mit gemeinsamen Sammelschienen möglich, so daß sich eine räumlich besonders kompakte Anordnung der erfindungsgemäßen Schaltschränke ergeben kann.

Wegen der hohen Energiedichte der Komponenten in den Schaltschränken ist eine Belüftung zu Kühlungszwecken vorteilhaft, hierfür weist der erfindungsgemäße Schaltschrank ein Lüftungsdach oder ein perforiertes Dachblech auf, die in Verbindung mit Lüftungsschlitzen im Unterteil des Schaltschranks für eine gute Kühlung sorgen. Gegebenenfalls kann die Kühlung durch einen Lüftungsventilator noch weiter verbessert werden.

Die modulartige Ausbildung der einzelnen Komponenten führt zu der Möglichkeit, die erfindungsgemäßen Schaltschränke je nach Bedarf mit Reglern und Serienkreistransformatoren zu versehen. Im Rahmen des Ausbaus und der Erweiterung von Flughäfen kann so flexibel reagiert werden. Die flexible Reaktion auf veränderte Anforderungen an die Serienkreisbefeuerungen durch die Installation von neuen Modulen oder den Austausch von Modulen entspricht dabei - unter erheblichen Kosteneinsparungen - der bisherigen Möglichkeit, einzelne Schaltschränke auszutauschen oder ggf. um weitere Schaltschränke zu ergänzen.

In weiterer Ausgestaltung der Erfindung ist vorgesehen, daß die Komponenten, die während des Betriebs eingestellt oder bedient werden, so angeordnet und geschützt sind, daß an ihnen während des Betriebs der Serienkreise gearbeitet werden kann. Dies ist von erheblichem Vorteil, da so der Flugbetrieb für Änderungen an den Reglern und ihren Komponenten nicht unterbrochen werden muß.

Die Erfindung wird anhand von Zeichnungen näher erläutert, aus denen, ebenso wie aus den Unteransprüchen, weitere andere erfindungswesentliche Einzelheiten entnehmbar sind.

Im einzelnen zeigen:
- FIG 1: einen erfindungsgemäßen Schaltschrank mit drei eingebauten Serienkreis-Reglern und ihre Peripherie,
- FIG 2: die Prinzipschaltung des Leistungsmoduls, des Steuermoduls und des Hochspannungsteils und
- FIG 3: einen Standardschaltschrank in unspezifischer Ausführung sowie
- FIG 4: einem erfindungsgemäßen Schaltschrank mit Lüftungsschlitzen teilweise in Explosionsdarstellung.

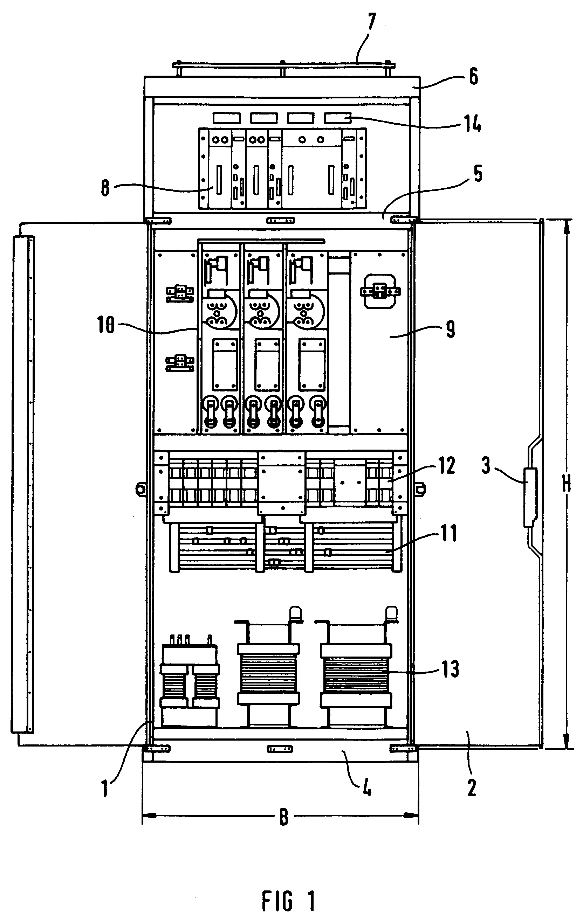

In FIG 1 bezeichnet 1 den Rahmen des Schaltschranks, der die Schaltschrank-Außenwandbleche trägt. Mit 2 sind die Türen des Schaltschranks bezeichnet, die in gezeigter Weise über Schlösser 3 und Schubstangen eine Verriegelung des Schaltschranks ermöglichen. Hier sind alle möglichen Schloß- und Verriegelungsarten möglich. Die Türen 2 weisen vorteilhaft in nicht gezeigter Weise übliche Lüftungsschlitze auf, die einen gegen Spritzwasser geschützten erheblichen Luftzutritt ermöglichen.

4 bezeichnet den Fuß des Schaltschranks, der gegebenenfalls Transportöffnungen oder -laschen aufweist. Mit 5 ist der Rahmen des Oberteils bezeichnet, der in Fortsetzung des Unterteils aus Profilen besteht und ggf. auf seiner Oberseite ein Abdeckblech 6 mit einer zusätzlichen Lüftungshaube 7 beträgt. Da die Türen 2 in nicht gezeigter Weise unten, etwa im Bereich der Transformatoren 13 mit Lüftungsschlitzen versehen sind, ergibt sich eine konstante Aufwärtsströmung der Luft in dem Schaltschrank.

In dem Rahmen 5, der das Oberteil des Schaltschranks bildet, sind Konstantstrom-Regler angeordnet, über denen sich vorteilhaft Beschriftungsfelder 14 befinden. Die Konstantstrom-Regler 8 können unterschiedlichen Typs sein, und nehmen dann, wie gezeigt, eine unterschiedliche Breite im Oberteil 5 ein. Der zur Verfügung stehende Platz erlaubt die Montage von sechs schmalen oder drei breiten Konstantstrom-Reglern, wie sie z.B. für die unterschiedlichen Leistungsstufen der verwendeten Leistungstransformatoren benötigt werden.

Im Oberteil des Unterteils des Schaltschranks befinden sich Modulbleche zur Aufnahme von Funktionskomponenten, die serienkreisweise nachrüstbar sind. Neben schmalen Modulblechen 10 ist noch ein Modulblech 9 für die Aufnahme von Drosselspulen vorgesehen, sofern dies erforderlich ist. Unten im Schaltschrank befinden sich Serienkreistransformatoren 13, die wie ersichtlich, in anforderungsgerecht gestaffelter Größe eingebaut werden können. Oberhalb der Leistungstransformatoren 13 befindet sich ein Sammelschienensystem 11 zur Einspeisung von Energie, das vorteilhaft mit Nachbarschränken verbindbar ausgebildet ist. Oberhalb des Sammelschienensystems 11 befindet sich eine Reihe von Sicherungslasttrennern 12. So ergibt sich ein funktioneller Aufbau bei gleichzeitig dichter Packung der einzelnen Komponenten im Inneren des Schaltschranks. Diese ändert sich auch nicht, wenn, wie vorgesehen, Serienkreistransformatoren und/oder Sammelschienen und/oder Sicherungslasttrenner unterschiedlicher Hersteller verwendet werden. Die funktionellen Vorteile und die Kostenvorteile des erfindungsgemäßen Schaltschranks bleiben in jedem Fall erhalten.

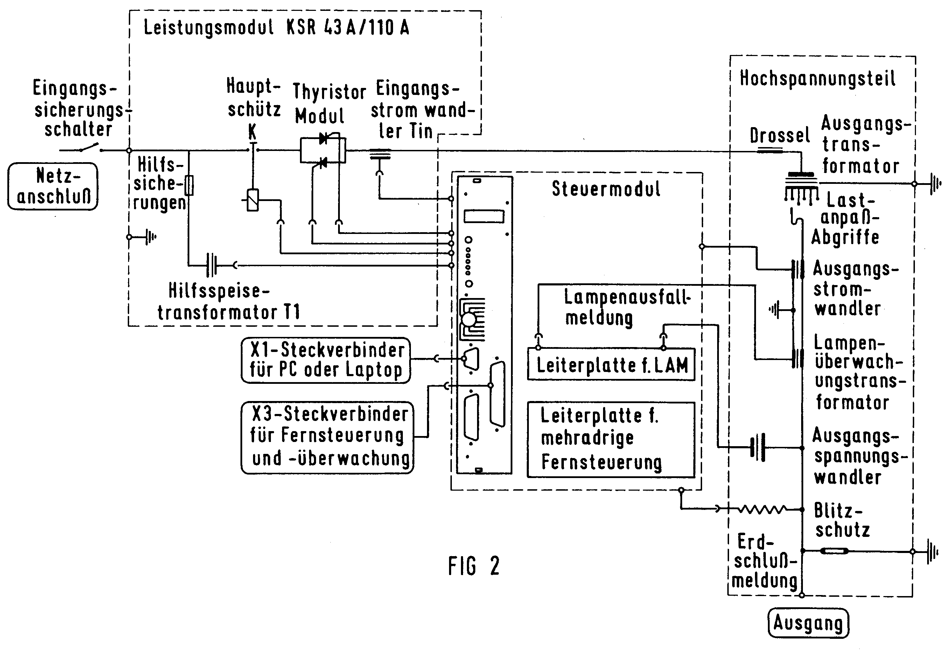

FIG 2 zeigt ein Beispiel für die Schaltung der einzelnen Komponenten im Inneren des Schaltschranks. Der Hochspannungsteil ist über Spannungswandler und Stromwandler mit dem Steuermodul verbunden, das weitere Funktionen, wie z.B. Lampenausfallmeldungen, Erdschlußmeldungen etc. enthält. Das Steuermodul enthält auch Steckverbinder für eine Fernsteuerung und - Überwachung sowie für den Anschluß eines PC oder Laptops zur Programmierung und Kontrolle. Das Leistungsmodul schließlich stellt über ein Tyristor- Submodul die vom Steuermodul vorgegebenen Werte im Serienkreis ein. Die einzelnen Komponenten in FIG 2 sind, soweit es zum Verständnis notwendig ist, mit ihrer Fachbezeichnung versehen.

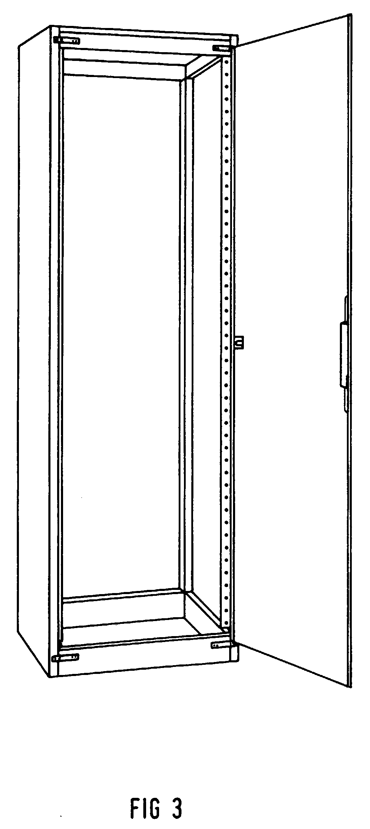

FIG 3 zeigt schließlich einen Standardschrank für eine Einzelaufstellung, dessen Elemente die einzelnen Teile des Schaltschrankgehäuses darstellen. Der erfindungsgemäße Schaltschrank setzt sich aus Standardschrankteilen zusammen, wobei die Kopf- und Fußteile des erfindungsgemäßen Schaltschranks durch Verbindung der entsprechenden Teile der Standardschränke mit den vorhandenen Verbindungselementen herstellbar sind. Insgesamt eine unerreicht kostengünstige und schnell montierbare Schaltschrank-Gehäuseausbildung für die vorgesehene Verwendung. Die Standardschränke des Schranksystems 8MF wurden bisher nicht für derartige Flughafenzwecke eingesetzt. Es hat sich jedoch herausgestellt, daß die Standardschränke mit den erfindungsgemäßen Modifikationen für die Lüftung und einer Sicherung der einzelnen Teile bei Berührung auch für Flughafenzwecke international geeignet sind.

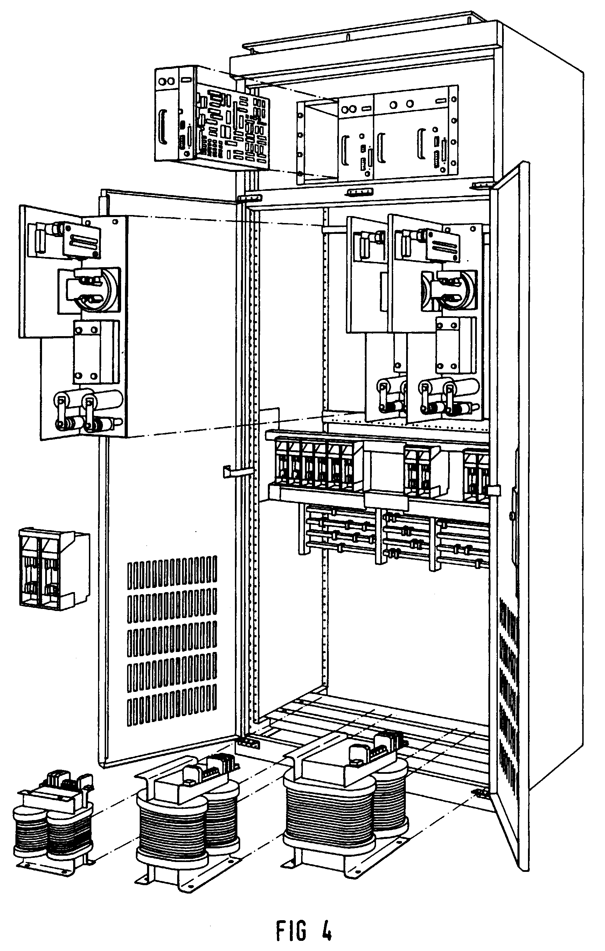

FIG 4 zeigt schließlich einen erfindungsgemäßen Schaltschrank in einer Darstellung, aus der der Modulaufbau besonders gut erkennbar ist. Alle für Veränderungen der Schalt- und Regelaufgaben auszutauschenden Teile sind, wie ersichtlich, vorteilhaft einzeln austauschbar ausgebildet.

## Patentansprüche

1. Schaltschrank zur Aufnahme von Komponenten einer Serienkreisbefeuerung auf Flughäfen, z.B. eines Konstantstrom-Reglers, eines Meßkomponententrägers und eines Serienkreistransformators, **dadurch gekennzeichnet,** daß seine Abmes-sungen derart sind, daß mehrere, vorzugsweise zumindest drei, Serienkreistransformatoren (13) mit ihren Anschlüssen, drei Meßkomponententräger (10) und drei Konstantstrom-Regler (8) in ihnen unterbringbar sind.

2. Schaltschrank nach Anspruch 1, **dadurch gekennzeichnet,** daß er derartige Abmessungen aufweist, daß in ihm bis zu sechs Serienkreistransformatoren (13) unter vier KVA sowie die zugehörigen Meßkomponententräger (10) und Konstantstrom-Regler (8) unterbringbar sind.

3. Schaltschrank nach Anspruch 1 oder 2, **dadurch gekennzeichnet,** daß er zwischen 80 und 100 cm, vorzugsweise 90 cm (B) breit ist, zwischen 50 und 80 cm, vorzugsweise 60 cm tief ist und zwischen 180 und 250 cm, vorzugsweise 220 cm (H) hoch ist.

4. Schaltschrank nach Anspruch 1, 2 oder 3, **dadurch gekennzeichnet,** daß er ein Unterteil mit vorzugsweise zweiteiligen Türen und ein vorzugsweise türloses Oberteil (5), das das Unterteil verlängert, aufweist.

5. Schaltschrank nach Anspruch 4, **dadurch gekennzeichnet,** daß in dem Oberteil (5) Konstantstrom-Regler mit Beschriftungsfeldern (14), vorzugsweise direkt zugänglich angeordnet sind.

6. Schaltschrank nach Anspruch 1, 2, 3, 4 oder 5, **dadurch gekennzeichnet,** daß die Meßkomponenten zusammen mit Sekundär-Funktionskomponenten serienkreisweise auf Modul-blechen im Oberteil des unteren Schaltschrankteils angeordnet sind.

7. Schaltschrank nach Anspruch 4 oder 6, **dadurch gekennzeichnet,** daß die Serienkreistransformatoren (13) im unteren Abschnitt des Schaltschrankunterteils angeordnet sind und daß die Türen (2) vor ihnen vorzugsweise Lüftungsschlitze aufweisen.

8. Schaltschrank nach Anspruch 4,6 oder 7, **dadurch gekennzeichnet,** daß oberhalb der Serienkreistransformatoren (13) ein Sammelschienensystem (11) zur Einspeisung von Energie angeordnet ist, das mit weiteren Schaltschränken verbindbar ist.

9. Schaltschrank nach Anspruch 4,6,7 oder 8, **dadurch gekennzeichnet,** daß oberhalb des Sammelschienensystems (11) zur Einspeisung von Energie Sicherungslasttrenner (12) angeordnet sind.

10. Schaltschrank nach einem oder mehreren der vorhergehenden Ansprüche, **dadurch gekennzeichnet,** daß in ihm mikroprozessorgesteuerte Konstantstrom-Regler des Typs MCR der Firma Siemens installierbar sind.

11. Schaltschrank nach einem oder mehreren der vorhergehenden Ansprüche, **dadurch gekennzeichnet,** daß er in Rahmenbauweise ausgeführt ist, wobei die Rahmen (1) Lochreihen zur Befestigung der Einbauten und zur Verbindung mit weiteren Schränken aufweisen.

12. Schaltschrank nach einem oder mehreren der vorhergehenden Ansprüche, **dadurch gekennzeichnet,** daß er ein Lüftungsdach (7) in der Schutzart IP00 oder ein perforiertes Dachblech in der Schutzart IP20 aufweist.

13. Schaltschrank nach einem oder mehreren der vorhergehenden Ansprüche, **dadurch gekennzeichnet,** daß er Leis-tungsmodule des Typs 6 SF 51.. der Firma Siemens aufnehmbar ausgebildet ist.

14. Schaltschrank nach einem oder mehreren der vorhergehenden Ansprüche, **dadurch gekennzeichnet,** daß seine Kompo-nenten modulartig aufgebaut sind und daß er zur Aufnahme von einzelnen Serienkreis-Modulen je nach Bedarf eingerichtet ist.

15. Schaltschrank nach einem oder mehreren der vorhergehenden Ansprüche, **dadurch gekennzeichnet,** daß seine ein-stellbaren Komponenten im Betrieb einstellbar ausgebildet sind.
